# NEUE EUROPÄISCHE PATENTSCHRIFT

(11) **EP 1 245 214 B2**
(45) Veröffentlichungstag und Bekanntmachung des Hinweises auf die Entscheidung über den Einspruch: **18.03.2009**
(45) Hinweis auf die Patenterteilung: 01.03.2006
(21) Anmeldenummer: 02006704.7
(22) Anmeldetag: 22.03.2002
(51) Int. Cl.: A61G 15/14, A61C 17/14

(54) **Dentaler Behandlungsstuhl mit einer schwenkbar gelagerten Speischale**
Dental treatment chair with a pivotably mounted spittoon
Fauteuil de soins dentaires comportant un crachoir monté pivotant

(30) Priorität: 26.03.2001 DE 20105249 U
(43) Veröffentlichungstag der Anmeldung: 02.10.2002
(73) Patentinhaber: Kaltenbach & Voigt GmbH, 88400 Biberach / Riss (DE)
(72) Erfinder: Mösslang, Hubert, 89610 Oberdischingen (DE); Wiest, Gebhard, 88454 Hochdorf (DE); Sailer, Günter, 88471 Laupheim (DE); Baumann, Linus, 88416 Bellamont (DE)
(74) Vertreter: Schmidt-Evers, Jürgen

(56) Entgegenhaltungen:
- DE-U- 29 821 642

## Beschreibung

Die Erfindung betrifft einen dentalen Behandlungsstuhl nach dem Oberbegriff des Anspruchs 1.

Ein dentaler Behandlungsstuhl dieser Art ist in der DE 18 22 226 U beschrieben. Bei diesem bekannten Behandlungsstuhl ist die Speischale an einem Schalenträger angeordnet, der um eine vertikale Drehachse schwenkbar auf einer im horizontalen Querschnitt runden Stützsäule gelagert ist, die an der einen Längsseite eines Stützteils abgestützt ist, das sich von einem Sockel nach oben erstreckt, und auf dessen anderer Längsseite ein Patientenstuhl angeordnet ist. Es ist der Zweck der schwenkbaren Anordnung der Speischale, zu ermöglichen, die Speischale zwecks Rechts- oder Linksausführung wahlweise an beiden Seiten des Behandlungsstuhls anzuordnen und durch horizontales Schwenken eine passende Positionierung der Speischale bezüglich des Behandlungsstuhls bzw. Patienten zu gewährleisten. Hierzu ist der Patientenstuhl beidseitig mit Lagerzapfen versehen, um ihn wahlweise in zwei verschiedenen, um 180° zueinander verschwenkten Stellungen am Stützteil anzuordnen, d. h. in Stellungen, bei denen sich das Stützteil einschließlich der Speischale auf der linken oder rechten Seite von dem Patienten aus gesehen befindet.

Bei dieser vorbekannten Ausgestaltung ist die Speischale mit dem sie tragenden Schalenträger mit einem gewissen Kraftaufwand manuell schwenkbar.

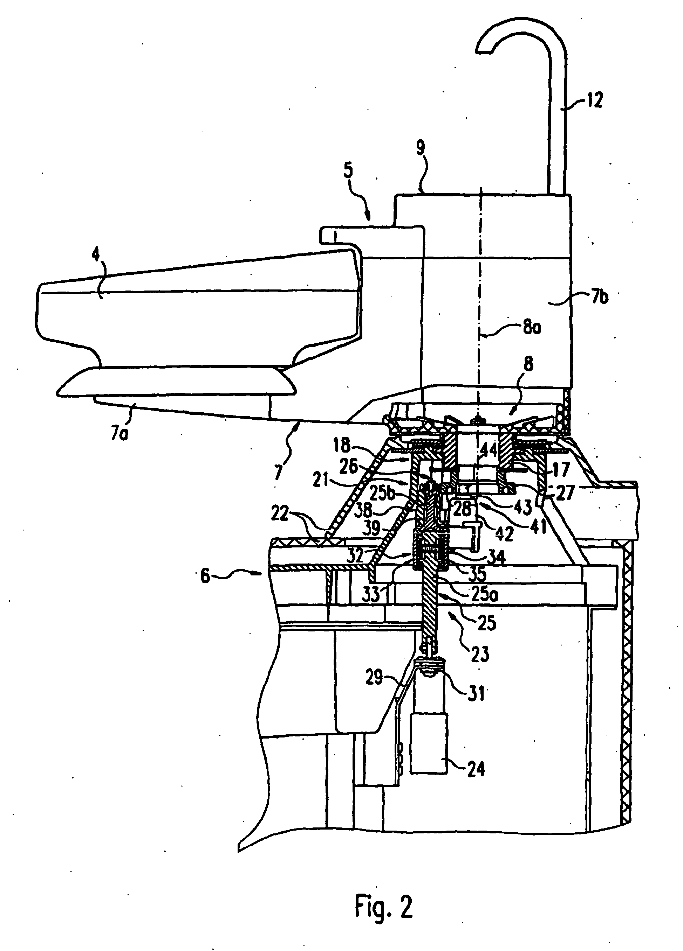

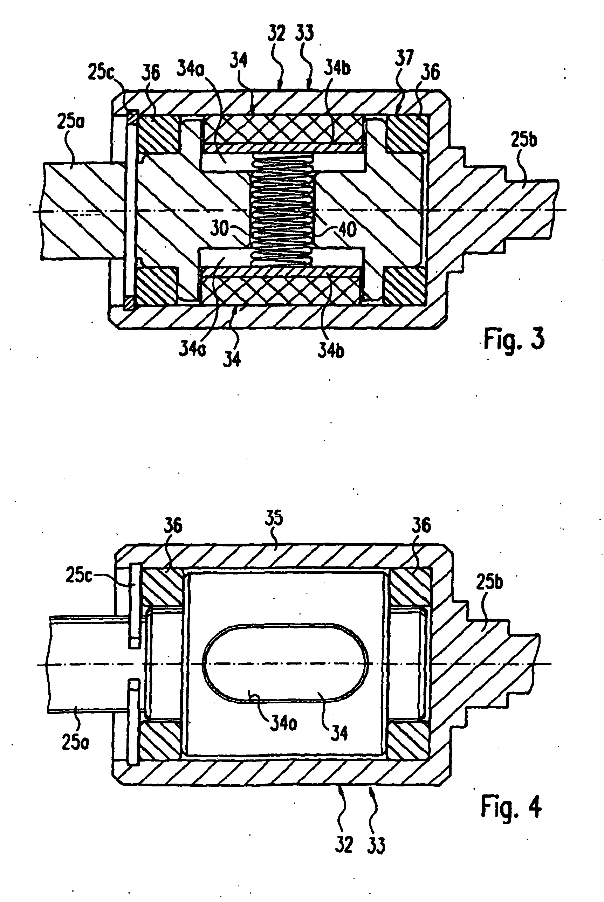

DE 298 21 642 U1 zeigt ein Speibecken für die Dentalpraxis mit einer Schwenkeinrichtung, wobei auf einem Standfuß eines Behandlungsstuhls ein unteres rundes Scheibenpaar in einem ersten Drehlager um eine vertikale Mittelachse drehbar gelagert ist. Über dem ist eine Speischale angeordnet, die in einem bezüglich des ersten Drehlagers seitlich versetztem zweiten Drehlager um eine außermittig angeordnete vertikale Drehachse drehbar gelagert ist. Zum Drehen des Scheibenpaars und der Speischale ist ein gemeinsamer Getriebemotor vorgesehen, der an der Unterseite des Scheibenpaars befestigt ist und mit einem im Hohlraum des Scheibenpaares angeordneten Antriebs-Zahnrad verbunden ist, das zugleich mit einem zentralen ortsfesten Zahnrad des Standfußes und mit einem zweiten dem zweiten Drehlager zugeordneten Zahnrad kämmt, das durch die dem zweiten Drehlager zugeordnete Welle mit der Speischale fest verbunden ist. (siehe Abb. 2 oder 4). Der Speischalenantrieb kann auch einen Riementrieb aufweisen.

Bei der Ausgestaltung nach Fig. 4 ist außerdem zwischen einem ersten Scheibenpaar und dem darüber angeordneten Speibecken ein zweites Scheibenpaar angeordnet, wobei das zweite Scheibenpaar in einem bezüglich beiden Scheibenpaaren radial versetzt angeordneten Drehlager auf dem ersten Scheibenpaar gelagert ist und die Speischale durch ein bezüglich ihr und dem zweiten Scheibenpaar koaxial angeordneten Drehlager drehbar auf dem zweiten Scheibenpaar gelagert ist.

Beiden Ausgestaltungen der Drehlagerung der Speischale ist gemeinsam, dass die Speischale zugleich um zwei parallel zueinander angeordneten vertikalen Drehachsen gedreht wird. Ein einseitig abstehender Tragarm für die Speischale ist nicht vorgesehen.

Bei der Ausgestaltung gemäß Abb. 2 ist ferner zwischen dem zweiten Zahnrad der Speischale und der zugehörigen Welle eine Rutschkupplung angeordnet.

Der Erfindung liegt die Aufgabe zugrunde, bei einem dentalen Behandlungsstuhl der eingangs angegebenen Art den Bedienungskomfort zu verbessern und die Verletzungsgefahr bei Kollisionen bei den Bewegungen des Patientenstuhls und/oder des Speischalenträgers zu vermeiden. Es ist ein weiteres Aufgabenmerkmal, diesbezüglich eine komfortable Steuerung zu gewährleisten.

Diese Aufgabe wird durch die Merkmale des Anspruchs 1 gelöst. Vorteilhafte Weiterbildungen der Erfindung sind in den Unteransprüchen beschrieben.

Beim erfindungsgemäßen Behandlungsstuhl weist das Gerätegehäuse eine Deckenwand auf, in deren Bereich das Drehlager angeordnet ist. Außerdem ist der Schalenträger durch einen motorischen Antrieb bewegbar, der im Gerätegehäuse angeordnet ist. Darüber hinaus ist dem Antrieb eine Überlastsicherung zugeordnet, die das auf den Schalenträger übertragbare maximale Drehmoment begrenzt. Die Überlastsicherung kann z.B. durch eine Rutschkupplung gebildet sein.

Der Behandlungsstuhl weist ferner Mittel auf, die dazu ausgebildet sind, eine Überlastung festzustellen und im Fall einer Überlastung den Antrieb nach einer Verzögerungszeit, vorzugsweise nach vier oder mehr Sekunden, abzuschalten, sofern die Überlastung länger dauert als die Verzögerungszeit.

Hierdurch ist es möglich, die Speischale mit dem Schalenträger zwischen einer Nichtgebrauchsstellung und einer Gebrauchsstellung durch den motorischen Antrieb zu schwenken. Es entfällt deshalb ein manuelles Schwenken der Speischale und der dafür erforderliche Aufwand für den Behandler und/oder eine Bedienungsperson. Das Schwenken der Speischale kann durch manuelle Betätigung eines z. B. elektrischen Steuerelements erfolgen, oder es ist auch möglich, das Schwenken der Speischale durch Funktionsverknüpfungen mit der vorhandenen Steuerung des Behandlungsstuhls automatisch oder halbautomatisch auszuführen. Es ist z. B. möglich, die Funktionsverknüpfung so auszubilden, daß in der Spülposition des Behandlungsstuhls oder beim Verstellen des Behandlungsstuhls in die Spülposition die Speischale automatisch angesteuert und in ihre Gebrauchsstellung geschwenkt wird. Beim Verstellen des Behandlungsstuhl in andere Positionen kann die Speischale automatisch weggeschwenkt bzw. in ihre Nichtgebrauchsstellung geschwenkt werden. Kollisionen mit dem Behandlungsstuhl oder anderen Gerätekomponenten können durch entsprechende Logikverknüpfungen vermieden werden. Durch eine vorzugsweise einstellbare Drehwinkelgeschwindigkeit zum Schwenken der Speischale lassen sich die Schwenkvorgänge an individuelle Wünsche des Behandlers anpassen. Die bezüglich ihres übertragbaren Drehmomentes vorzugsweise einstellbare Überlastsicherung oder Rutschkupplung dient als Sicherheitseinrichtung für das System und als Kraftbegrenzung bei einer nicht auszuschließenden Kollision mit dem Patienten oder Teilen des Behandlungsstuhls beim Schwenken der Speischale, insbesondere beim Schwenken in ihre Gebrauchsstellung. Das maximal übertragbare Drehmoment ist so eingestellt, daß eine Verletzungsgefahr für den Patienten nicht besteht. Zur Positionserfassung der Speischale kann ein Drehwinkelgeber (Potentiometer) als Absolutwertgeber vorgesehen sein, der z. B. durch einen Antriebsdrehkranz angetrieben wird. Hierdurch kann gewährleistet werden, daß die tatsächliche Stellung der Speischale erfaßt wird.

Die erfindungsgemäße Ausgestaltung eignet sich insbesondere für eine Speischale mit einem Schalenträger, der auf einem Gehäusekasten des Behandlungsstuhls angeordnet ist. Bei einer solchen Ausgestaltung lassen sich das Drehlager und der motorische Antrieb im Gehäusekasten von außen unsichtbar anordnen, wodurch sich nicht nur eine einfache und stabile Bauweise verwirklichen läßt, sondern wodurch auch das Aussehen des Behandlungsstuhls verbessert wird. Außerdem führt die erfindungsgemäße Ausgestaltung zur einer Verbesserung der Hygiene. Dies ist dadurch begründet, daß die Speischale und/oder der Schalenträger zum Verschwenken nicht angefaßt zu werden brauchen und außerdem aufgrund der unsichtbaren Anordnung des Drehlagers und des motorischen Antriebs sich einfache und glatte Oberflächen realisieren lassen, die sich in einfacher Weise reinigen und pflegen lassen.

Als Antriebsmotor eignet sich vorzüglich ein elektrischer Antriebsmotor, der sich vorteilhaft in eine vorhandene elektrische Steuerung für den Behandlungsstuhl integrieren läßt. Im Rahmen der Erfindung eignen sich aber auch andere Antriebsmotoren, wie z. B. ein Luftmotor oder Hydraulikmotor oder eine pneumatische oder hydraulische Kolbenzylindereinheit.

Die Rutschkupplung ist vorzugsweise zwischen dem Antriebsmotor und einem Antriebsrad angeordnet, das den Schalenträger dreht bzw. schwenkt. Hierdurch läßt sich eine einfache Begrenzung der Schwenkbewegungsendpunkte erreichen, weil diese bei einem Durchrutschen der Rutschkupplung ihre Zuordnung bezüglich einer Ausgangsschwenkstellung (O-Position) nicht verlieren.

Weitere Ausgestaltungsmerkmale der Erfindung führen zu einfachen und kleinen sowie funktionssicheren Bauweisen, die sich vorteilhaft integrieren lassen, z. B. in das Gerätegehäuse.

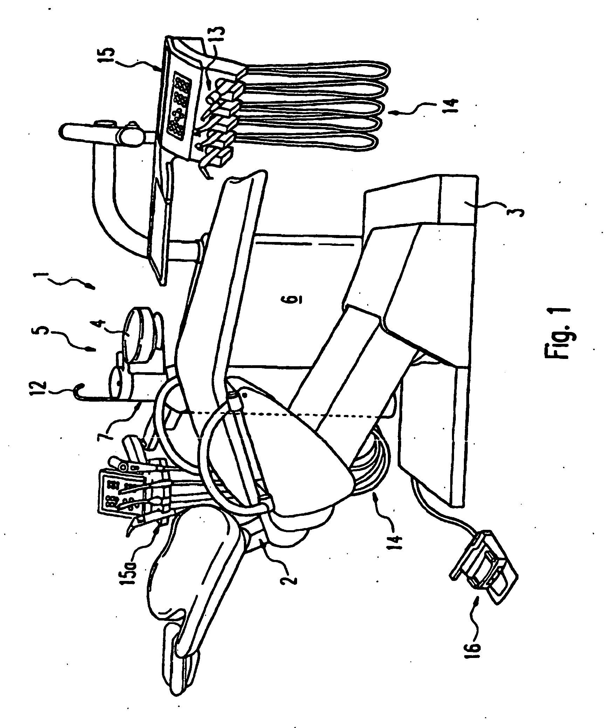

Nachfolgend werden vorteilhafte Ausgestaltungen der Erfindung anhand eines bevorzugten Ausführungsbeispiels und Zeichnungen näher erläutert. Es zeigen
- Fig. 1: einen erfindungsgemäßen Behandlungsstuhl in perspektivischer Seitenansicht;
- Fig. 2: einen vertikalen Teilschnitt durch eine Speischalenanordnung des Behandlungsstuhls;
- Fig. 3: eine durch eine Rutschkupplung gebildete Überlastsicherung für den Behandlungsstuhl im axialen Schnitt;
- Fig. 4: die Rutschkupplung in einem bezüglich Fig. 3 um 90 ° verdrehten axialen Teilschnitt,
- Fig. 5: eine Einzelheit des Behandlungsstuhls gemäß Fig. 2 mit einem Drehwinkelgeber in perspektivischer Rückansicht;
- Fig. 6: eine durch eine Rutschkupplung gebildete Überlastsicherung für den Drehwinkelgeber im axialen Schnitt.

Die Hauptteile des in seiner Gesamtheit mit 1 bezeichneten Behandlungsstuhls sind ein vorzugsweise höhenverstellbarer Patiententstuhl 2 mit einer Rückenlehne und einer Kopfstütze. Der Patientenstuhl 2 ist höhenverstellbar auf einer Stuhlbasis 3 gelagert.

Seitlich neben dem Patientenstuhl 2 ist eine Speischale 4 durch eine Speischalenanordnung 5 auf einem Gerätegehäuse 6 gelagert. Die Speischale 4 ist auf einem Tragarm 7a gelagert, der seitlich von einem Basiskörper 7b eines Schalenträgers 7 absteht, der in einem Drehlager 8 um eine vertikale Dreh- bzw. Schwenkachse 8a dreh- bzw. schwenkbar auf dem Gerätegehäuse 6 gelagert ist. Die Schwenkachse 8a ist zugleich vertikale Mittelachse des im horizontalen Querschnitt z. B. runden Basiskörpers 7b. Der Schalenträger 7 ist zugleich Träger für einen Standplatz 9 eines nicht dargestellten Bechers und eines Einlaßhahnes 12 für Spülflüssigkeit, insbesondere Wasser.

Außerdem sind ein oder mehrere Behandlungsinstrumente 13, z. B. in Form eines Spritzhandstücks oder eines Bohrhandstücks vorgesehen, die jeweils durch eine flexible Versorgungsleitung 14 mit einer Versorgungseinrichtung verbunden sind und an bzw. auf einer Ablagevorrichtung 15 deponierbar sind, die vorzugsweise horizontal schwenkbar, z. B. am Gerätegehäuse 6, gelagert ist. Zusätzlich können ein oder mehrere weitere Behandlungsinstrumente 13, z. B. ebenfalls ein Spritzhandstück oder ein Saughandstück, vorgesehen sein, deren Versorgungsleitungen 14 jeweils ebenfalls mit der Versorgungseinrichtung verbunden sind, und die an bzw. auf einer Ablagevorrichtung 15a deponierbar sind. Des weiteren ist eine elektrische Steuereinrichtung zur Steuerung der Versorgungseinrichtung und der Behandlungsinstrumente 13 unter Berücksichtigung der jeweiligen Funktionen der Behandlungsinstrumente 13 vorgesehen. Die Versorgungseinrichtung und/oder die Steuereinrichtung ist bzw. sind in den Ablagevorrichtungen 15, 15a und/oder im Gerätegehäuse 6 angeordnet. Zum Ein- und Ausschalten verschiedener Funktionen des Behandlungsstuhls 2 und/oder des wenigstens einen Behandlungsinstruments 13 sind Schaltelemente an den Ablagevorrichtungen 15, 15a und gegebenenfalls auch an einem Fußschalter 16 vorgesehen.

Wie insbesondere Fig. 2 zeigt, befindet sich das Drehlager 8 im Bereich der Deckenwand des Gerätegehäuses 6, wobei beim vorliegenden Ausführungsbeispiel eine sich vom Basiskörper 7b nach unten erstreckende, vorzugsweise hohle, Lagerwelle 17 eine horizontale Lagerwand 18 in einem Lagerloch durchfaßt und an der Lagerwand 18 drehbar gelagert ist. Die Lagerwand 18 kann Teil eines domförmigen Aufsatzes 21 des Gerätegehäuses 6 sein, wobei der Aufsatz 21 durch eine Verkleidung 22 verkleidet sein kann.

Der Schalenträger 7 ist durch einen motorischen Antrieb 23 zwischen einer Gebrauchsstellung, in der die Speischale 4 sich in der Nähe des Patientenstuhls 2 befindet, und einer Nichtgebrauchsstellung, in der die Speischale 4 sich vom

Patientenstuhl 2 weiter entfernt befindet, hier weggeschwenkt ist, hin und her drehbar bzw. schwenkbar. Der Antrieb 23 weist einen vorzugsweise elektrischen Antriebsmotor 24 auf, der durch eine Antriebswelle 25 und ein Rädergetriebe 26 mit der Lagerwelle 17 in Antriebsverbindung steht. Das Rädergetriebe 26 ist vorzugsweise ein Zahnradgetriebe mit einem am unteren Ende der Lagerwelle 17 angeordneten bzw. befestigten Zahnkranz 27, der mit einem Ritzel 28 kämmt, das auf der Antriebswelle 25 sitzt. Das Rädergetriebe 26 kann auch durch einen Riementrieb oder einen Reibradtrieb gebildet sein. Es ist im Rahmen der Erfindung auch möglich, daß der Reibradtrieb eine Rutschkupplung bildet. Beim vorliegenden Ausführungsbeispiel erstreckt sich die Antriebswelle 25 vom Ritzel 28 vertikal nach unten, wobei der Antriebsmotor 24 mit dem unteren Ende der Antriebswelle 25 in Antriebsverbindung steht. Der Antriebsmotor 24 ist durch einen Halter 29, z. B. in Form eines Lagerbockes, an der Innenwand des Gerätegehäuses 6 oder einem Anbauteil desselben gelagert. Vorzugsweise ist der Antriebsmotor 24 durch ein Dämpfungsmittel 31 mit dem Halter 29 verbunden, um vom Antriebsmotor 24 ausgehende Schwingungen zu dämpfen und dadurch Geräusche und eine Schwingungsübertragung auf des Gerätegehäuse 6 und/oder den Schalenträger 7 zu vermeiden oder zumindest zu verringern. Beim vorliegenden Ausführungsbeispiel ist wenigstens ein Dämpfungsmittel 31 aus elastischem Material, z. B. Gummi oder Kunststoff, vorgesehen, durch das der Antriebsmotor 24 mittelbar mit dem Halter 29 verbunden ist. Vorzugsweise handelt es sich bei dem Dämpfungsmittel 31 um ein auf dem Markt erhältliches Fertigbauteil.

Dem motorischen Antrieb 23 ist eine Überlastsicherung 32 zugeordnet, die das maximale Drehmoment des Antriebs 23 auf einen Wert begrenzt, der bezüglich einer Verletzungsgefahr für den Patienten ungefährlich ist. Hierdurch wird eine Kraftbegrenzung bei einer Kollision z.B. des Patienten mit der Speischale 4 und/oder dem Schalenträger 7 erreicht. Aufgrund der Drehmomentbegrenzung kann die drehbare Speischalenanordnung 5 auf den Patienten und/oder auf Teilen des Behandlungsstuhls 1 nur eine ungefährliche Kraft, z. B. eine Druck- bzw. Klemmkraft, ausüben. Bei einer das maximale Drehmoment überschreitenden Antriebskraft tritt die Überlastsicherung 32 in Funktion, und sie begrenzt das maximale Drehmoment auf den ungefährlichen Wert. Beim vorliegenden Ausführungsbeispiel ist die Überlastsicherung 32 durch eine Rutschkupplung 33 gebildet, die in die Antriebsverbindung zwischen dem Antriebsmotor 24 und dem Schalenträger 7 eingeschaltet ist, z. B. zwischen dem Antriebsmotor 24 und dem Ritzel 28, oder durch den Riemen- bzw. Reibradtrieb gebildet sein kann. Die Antriebswelle 25 kann aus zwei Wellenabschnitten 25a, 25b bestehen, zwischen denen die Rutschkupplung 33 angeordnet ist. Beim Ausfühmngsbeispiel weist der eine Antriebswellenabschnitt 25a, hier der mit dem Antriebsmotor 24 verbundene Antriebswellenabschnitt, ein oder mehrere, durch eine Feder 30 radial nach außen vorgespannte Reibelemente 34 auf, die gegen die Innenwandung einer sie umgebenden Reibhülse 35 vorgespannt sind, die vorzugsweise einteilig am anderen Antriebswellenabschnitt 25b angeordnet ist. Die axiale Länge der Reibhülse 35 ist größer bemessen als die axiale Länger der Reibelemente 34. Hierdurch ist es möglich, auf beiden axialen Seiten der Reibelemente 34 Lagerelemente 36 zwischen dem Antriebswellenabschnitt 25a und der Reibhülse 35 anzuordnen, wodurch ein Drehlager 37 zwischen den Antriebswellenabschnitten 25a, 25b gebildet ist. Bei den Lagerelementen 36 kann es sich um Gleithülsen oder Gleitringen, z. B. aus Kunststoff, handeln. Diese Ausgestaltung reicht für eine störungsfreie Lagerfunktion aus, da das Drehlager 37 nur in Ausnahmefällen in Funktion tritt, nämlich dann, wenn die Schwenkbewegung der Speischalenanordnung 5 blockiert wird. In diesem Falle rutscht die Rutschkupplung 33 durch, wodurch das maximale Drehmoment auf den ungefährlichen Wert beschränkt wird.

Der beim Ausführungsbeispiel obere Antriebswellenabschnitt 25b kann zusätzlich in einem Drehlager 38 gelagert sein, das z. B. durch eine Lagerhülse 39 gebildet sein kann, und die sich beim Ausführungsbeispiel von der Reibhülse 35 bis zum Ritzel 28 erstreckt. Die Lagerhülse 39 kann jedoch auch aus zwei einen axialen Abstand zueinander aufweisenden Lagerteilen bestehen. Das Drehlager 38 ist mittelbar oder unmittelbar am Gerätegehäuse 6 befestigt, z. B. am Aufsatzteil 21, was im einzelnen nicht dargestellt ist.

Die vorzugsweise in einer Ausnehmung 34a im Antriebswellenabschnitt 25b aufgenommenen Reibelemente 34 weisen an ihren einander abgewandten Umfangsflächenabschnitten zylinderabschnittförmige Reibflächen auf, die durch einen Reibbelag gebildet sein können, der jeweils auf die Außenfläche eines Basiskörpers 34b des zugehörigen Reibelements 34 fest aufgebracht, z. B. beschichtet ist. Beim Ausführungsbeispiel weist der Antriebswellenabschnitt 25a im Bereich der Reibelemente 34 ein radiales Durchgangsloch 40 auf, dessen Öffnungen den Reibelementen 34 gegenüberliegen. Diese Ausgestaltung ermöglicht es, eine einzige Feder 30, insbesondere eine Wendelfeder, als Druckfeder zum Spreizen der Reibelemente 34 zu verwenden. Zur axialen Positionierung des Antriebswellenabschnitts 25a in der Reibhülse 35 kann ein Sicherungsring 25c, z. B. ein Federring, vorgesehen sein, der in eine Nut in der Reibhülse 35 sitzt und eine Schulter des Antriebswellenabschnitts 25a begrenzt.

Der Speischalenanordnung 5 oder dem Antrieb 23 ist ein Drehweg- oder Drehwinkelgeber 41 zugeordnet, der den von der Speischalenanordnung 5 bei ihrer Dreh- bzw. ihrer Schwenkbewegung ausgeführten Drehweg oder Drehwinkel ermittelt und z. B. fortwährend oder wenigstens in der Gebrauchsstellung und/oder in der Nichtgebrauchsstellung ein Signal erzeugt, das der vorhandenen Steuervorrichtung zwecks Weg- oder Drehwinkelsteuerung oder Ein- und/oder Abschaltung des Antriebs 23 und/oder zur Ansteuerung einer Null-Position zugeleitet wird. Die Bauweise und Funktion solcher Drehweg oder -winkelgeber, z.B. ein Potentiometer, ist bzw. sind an sich bekannt und brauchen deshalb nicht näher beschrieben zu werden. Beim Ausführungsbeispiel weist der Geber 41 eine in einem Gebergehäuse 42 drehbar gelagerte Geberwelle 43 auf, die in Drehantriebsverbindung mit dem Schalenträger 7 oder den Drehteilen des Antriebs 23 steht. Vorzugsweise steht die Geberwelle 43 durch ein auf ihr angeordnetes Geberritzel 44 mit dem Zahnkranz 27 in Antriebsverbindung, wobei das Geberritzel 44 bezüglich des Antriebsritzels 28 in Umfangsrichtung versetzt angeordnet ist.

In einem Überlastungsfall tritt die Überlastsicherung 32 in Funktion und es wird der Antrieb 23 abgeschaltet. Eine Überlastung kann z.B. dadurch festgestellt werden, dass die Stromaufnahme des elektrischen Antriebs als Istwert gemessen wird und dann, wenn die erhöhte Stromaufnahme den Sollwert beim Durchrutschen der Rutschkupplung erreicht, der Antrieb 23 abgeschaltet wird, vorzugsweise nach einer Verzögerung von z.B. 4 Sekunden abgeschaltet wird.

Eine andere Maßnahme kann darin bestehen, den der Steuervorrichtung z.B. gespeichert zur Verfügung stehenden Sollwert des Drehweges oder Drehwinkels mit dem vom Geber 41 ermittelten Istwert zu vergleichen und den Antrieb 23 dann, wenn der Istwert den Sollwert nicht erreicht, abzuschalten, vorzugsweise nach einer Verzögerungszeit von z.B. etwa 4 Sekunden oder mehr abzuschalten.

Das Abschalten nach einer Verzögerungszeit hat den Vorteil, dass kurzzeitige Beeinträchtigungen bzw. Blockierungen der Speischalenbewegung, z.B. durch einen Arm des Patienten, nicht zur Abschaltung des Antriebs 23 führen, sondern nur solche Beeinträchtigungen, die länger dauern als die Verzögerungszeit.

Bei einer Rechner-gesteuerten Steuervorrichtung kann der mit dem Geber 41 ermittelte Absolutwert der Schalenstellung eingelesen werden. Ist der Sollwert (Endstellung) der Speischale 4 noch nicht erreicht, aber keine Analogwertänderung (Geberwertänderung) mehr zu erkennen ist, dann muss ein Hindernis vorhanden sein, wobei der Antriebsmotor weiter läuft und die Überlastsicherung 32 in Funktion tritt. Wenn dies z.B. etwa 4 Sekunden oder mehr dauert, wird der Antriebsmotor abgeschaltet.

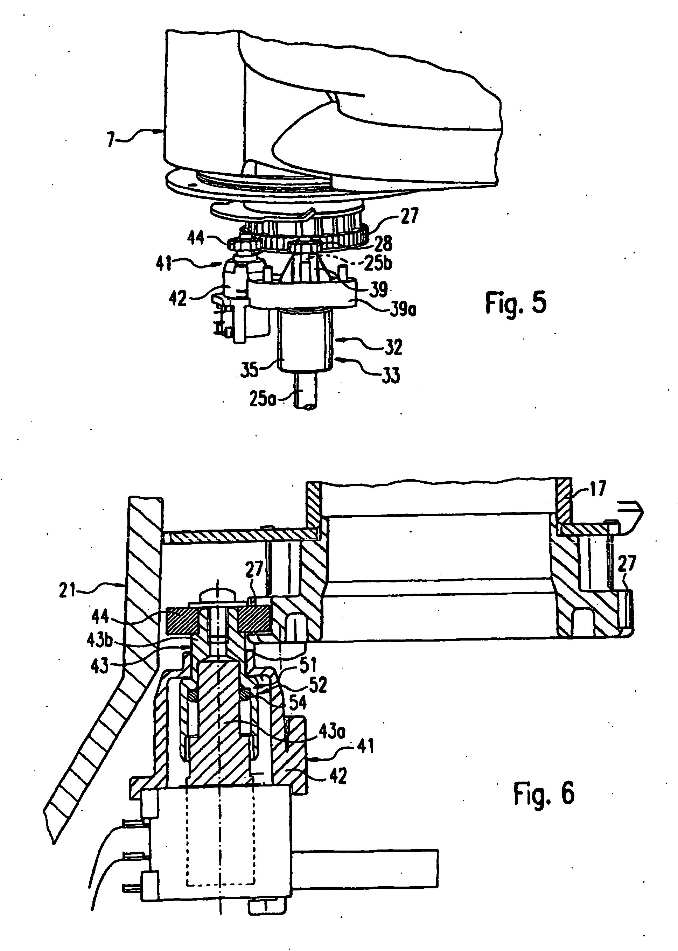

Das Gebergehäuse 42 kann an der Innenwand des Gerätegehäuses 6 oder einem Anbauteil desselben gelagert sein, z. B. am Aufsatzteil 21. Noch einfacher und raumsparender ist es, den Geber 41 an einem nicht drehbaren Bauteil des Antriebs 23 anzubauen, z. B. an die Lagerhülse 39, wie es Fig. 2 und 5 zeigen. Das Ausführungsbeispiel nach Fig. 5 unterscheidet sich von dem nach Fig. 2 dadurch, daß die Lagerhülse 39 eine andere, insbesondere eine im Querschnitt größere bzw. flanschartige Bauform aufweist, wobei der Geber 41 an einem Flansch 39a der Lagerhülse 39 angebaut ist.

Es ist aus steuerungstechnischen Gründen vorteilhaft, dem Geber 41 eine Überlastsicherung 51 zuzuordnen, die vorzugsweise durch eine Rutschkupplung 52 gebildet ist. Eine solche Rutschkupplung 52 kann durch wenigstens ein elastisch gegen eine Reibfläche spreizbares oder kontraktierbares Reibelement gebildet sein, wie es beim Ausführungsbeispiel gemäß Fig. 3 und 4 beschrieben worden ist.

Beim Ausführungsbeispiel nach Fig. 6, bei der gleiche oder vergleichbare Teile ebenfalls mit gleichen Bezugszeichen bezeichnet sind, ist die Rutschkupplung 52 durch einen Kupplungsring 54 aus elastisch komprimierbarem Material, z. B. Gummi oder Kunststoff, gebildet. Der Kupplungsring 54 ist komprimiert zwischen zwei koaxial angeordneten und drehbar aneinander gelagerten Geberwellenabschnitten 43a, 43b angeordnet. Aufgrund seiner elastischen Spannung, mit der er gegen die Reibfläche wenigstens eines der Geberwellenabschnitte 43a, 43b drückt, ist die Drehmitnahme aufgrund der Reibung gewährleistet. Fig. 6 zeigt ein Ausführungsbeispiel, bei dem der Kupplungsring 54 radial komprimiert ist. Er befindet sich zwischen einem verjüngten zylindrischen Geberwellenabschnitt 43a und einem diesen muffenförmig übergreifenden hohlzylindrischen Geberwellenabschnitt 43b, die die Geberwelle 43 bilden. Der Innen- und/oder Außendurchmesser des Kupplungsrings 53 ist mit einem Über- und/oder Untermaß bezüglich den Querschnitten des zylindrischen und/oder hohlzylindrischen Abschnitts der Geberwellenabschnitte 43a, 43b ausgebildet, so daß er dazwischen elastisch komprimiert ist.

Bei dem den Zahnkranz 27 tragenden Drehteil und/oder der Hülse 39 und/oder dem Ritzel 44 und/oder dem Gebergehäuse 42 handelt es sich vorzugsweise um KunststoffSpritzteile.

Im Rahmen der Erfindung ist es auch möglich, die Rutschkupplung 33 des Antriebs 32 entsprechend der Rutschkupplung 51 mit einem elastischen Kupplungsring 54 und umgekehrt auszubilden.

Wenn der Schalenträger 7 durch den Antrieb 23 hin und her geschwenkt wird, kann dies eine flexible Zuführungsleitung und Abführungsleitung für das Frischwasser des Einlaßhahnes 12 und das Abwasser der Speischale 4 gewährleisten. Besonders vorteilhaft ist jeweils eine Drehkupplung in diesen Leitungen. Eine solche eignet sich sowohl für einen hin und her schwenkbaren als auch drehbaren (360 °) Schalenträger 7.

## Patentansprüche

1. Dentater Behandlungsstuhl (1) mit einem Patientenstuhl (2) und einer Speischale (4), die auf einem Tragarm (7a) gelagert ist, der seitlich von einem Basiskörper (7b) eines Schalenträgers (7) absteht, der in einem Drehlager (8) um eine vertikale Achse (8a) drehbar oder hin und her schwenkbar gelagert ist, wobei das Drehlager (8) im Bereich eines Gerätegehäuses (6) angeordnet ist,
**dadurch gekennzeichnet,**
a) **dass** das Gerätegehäuse (6) eine Deckenwand aufweist,
b) **dass** das Drehlager (8) im Bereich der Deckenwand des Gerätegehäuses (6) angeordnet ist,
c) **dass** der Schalenträger (7) durch einen motorischen Antrieb (23) bewegbar ist,
d) **dass** der Antrieb (23) im Gerätegehäuse (6) angeordnet ist,
e) und **dass** dem Antrieb (23) eine Überlastsicherung (32) zugeordnet ist, die das auf den Schalenträger (7) übertragbare maximale Drehmoment begrenzt,
wobei der Behandlungsstuhl Mittel aufweist, die dazu ausgebildet sind, eine Überlastung festzustellen und im Fall einer Überlastung den Antrieb (23) nach einer Verzögerungszeit, vorzugsweise nach vier oder mehr Sekunden, abzuschalten, sofern die Überlastung länger dauert als die Verzögerungszeit.

2. Dentaler Behandlungsstuhl nach Anspruch 1,
**dadurch gekennzeichnet,**
**dass** der Antrieb (23) eine vorzugsweise vertikal angeordnete Antriebswelle (25) aufweist, die durch ein Rädergetriebe (26) mit einer vorzugsweise hohlen Lagerwelle (17) in Antriebsverbindung steht, die sich vom Schalenträger (7) vertikal nach unten in den Hohlraum des Gerätegehäuses (6) erstreckt.

3. Dentaler Behandlungsstuhl nach Anspruch 2,
**dadurch gekennzeichnet,**
**dass** das Rädergetriebe (26) durch ein Zahnradgetriebe oder einen Riementrieb oder einen Reibradtrieb gebildet ist.

4. Dentaler Behandlungsstuhl nach einem der vorherigen Ansprüche,
**dadurch gekennzeichnet,**
**dass** die Überlastsicherung (32) durch eine Rutschkupplung (33) gebildet ist, die z.B. in das Rädergetriebe (26) integriert ist, oder z.B. durch den Riementrieb oder das Reibradgetriebe gebildet ist, oder an der Antriebswelle (25) angeordnet ist.

5. Dentaler Behandlungsstuhl nach Anspruch 4,
**dadurch gekennzeichnet,**
**dass** die Rutschkupplung (33) zwischen zwei Antriebswellenabschnitten (25a, 25b) angeordnet ist.

6. Dentaler Behandlungsstuhl nach Anspruch 5,
**dadurch gekennzeichnet,**
**dass** der eine Antriebswellenabschnitt (25b) das ihm zugewandte Ende des anderen Antriebswellenabschnitts (25a) mit einer Reibhülse (35) übergreift und zwischen der Reibhülse (35) und dem übergriffenen Ende des anderen Antriebswellenabschnitts (25a) ein oder mehrere Reibelemente (34) angeordnet sind.

7. Dentaler Behandlungsstuhl nach Anspruch 6,
**dadurch gekennzeichnet,**
**dass** das oder die Reibelemente (34) am übergriffenen Antriebswellenabschnitt (25a) angeordnet und elastisch gegen die Hülse (35) vorgespannt sind.

8. Dentaler Behandlungsstuhl nach einem der Ansprüche 5 bis 7,
**dadurch gekennzeichnet,**
**dass** zwischen den Antriebswellenabschnitten (25a, 25b) ein Drehlager (37) ausgebildet ist.

9. Dentaler Behandlungsstuhl nach einem der vorherigen Ansprüche,
**dadurch gekennzeichnet,**
**dass** der Antrieb (23) einen vorzugsweise elektrischen Antriebsmotor (24) aufweist, der durch ein Dämpfungsglied (31) mit der Antriebswelle (25) verbunden ist.

10. Dentaler Behandlungsstuhl nach einem der vorherigen Ansprüche,
**dadurch gekennzeichnet,**
**dass** ein Drehwinkelgeber (41) vorgesehen ist, der den Drehweg oder den Dreh- oder Schwenkwinkel der Speischale (4) bzw. des Schalenträgers (7) ermittelt und z. B. mit einer Geberwelle (43) in Drehantriebsverbindung mit dem Schalenträger (7) oder einem Teil des Antriebs (23) steht.

11. Dentaler Behandlungsstuhl nach Anspruch 10,
**dadurch gekennzeichnet,**
**dass** dem Drehwinkelgeber (41) eine Überlastsicherung (51) zugeordnet ist, die das maximal übertragbare Drehmoment begrenzt und vorzugsweise durch eine Rutschkupplung (52) gebildet ist.

12. Dentaler Behandlungsstuhl nach Anspruch 11,
**dadurch gekennzeichnet,**
**dass** die Rutschkupplung (52) einen zwischen zwei Reibflächen elastisch komprimierten Kupplungsring (54) aufweist.

## Claims

1. Dental treatment chair (1) having a patient chair (2) and a spittoon (4) which is mounted on a carrier arm (7a) which stands out to the side from a base body (7b) of a spittoon carrier (7) which is mounted rotatably or pivotably back and forth around a vertical axis (8a) in a rotary bearing (8), wherein the rotary bearing (8) is arranged in the region of a device housing (6),
**characterized,**
a) **in that** the device housing (6) has a cover wall,
b) **in that** the rotary bearing (8) is arranged in the region of the cover wall of the device housing (6)
c) **in that** the spittoon carrier (7) is moveable by means of a motorized drive (23),
d) **in that** the drive (23) is arranged in the device housing (6),
e) and **in that** the drive (23) has an overload protector (32) associated therewith, which limits the maximum torque transmittable to the spittoon carrier (7), wherein the treatment hair has means which are constituted to detect an overload and, in the event of an overload, to switch off the drive (23) after a delay time, preferably after four or more seconds, so far as the overload lasts for longer than the delay time.

2. Dental treatment chair according to claim 1,
**characterized in that,**
the drive (23) has a preferably vertically arranged drive shaft (25) which stands in drive connection by means of a gear transmission (26) with a preferably hollow bearing shaft (17) which extends from the spittoon carrier (7) vertically downwardly into the hollow space of the device housing (6).

3. Dental treatment chair according to claim 2,
**characterized in that,**
the gear transmission (26) is provided by means of a toothed gear transmission or a belt transmission or a friction gear transmission.

4. Dental treatment chair according to any preceding claim,
**characterized in that,**
the overload protector (32) is formed by means of a sliding clutch (33), which e.g. is integrated into the gear transmission (26), or e.g. is formed by means of the belt transmission or the friction gear transmission, or is arranged on the drive shaft (25).

5. Dental treatment chair according to claim 4,
**characterized in that,**
the sliding clutch (33) is arranged between two drive shaft sections (25a, 25b).

6. Dental treatment chair according to claim 5,
**characterized in that,**
the one drive shaft section (25) engages over the facing end of the other drive shaft section (25a) with a friction sleeve (35), and one or more friction elements (34) are arranged between the friction sleeve (35) and the engaged over end of the other drive shaft section (25a).

7. Dental treatment chair according to claim 6,
**characterized in that,**
the friction element or elements (34) are arranged on the engaged over drive shaft section (25a) and are elastically biased against a sleeve (35).

8. Dental treatment chair according to any of claims 5 to 7,
**characterized in that,**
between the drive shaft sections (25a, 25b) a rotary bearing (37) is formed.

9. Dental treatment chair according to any preceding claim,
**characterized in that,**
the drive (23) has a preferably electrical drive motor (24) which is connected with the drive shaft (25) by means of a damping member (31).

10. Dental treatment chair according to any preceding claim,
**characterized in that,**
there is provided a rotary angle indicator (41) which detects the path of rotation or the rotary or pivot angle of the spittoon (4) or of the spittoon carrier (7) and, e.g. with an indicator shaft (43), stands in rotary drive connection with the spittoon carrier (7) or a part of the drive (23).

11. Dental treatment chair according to claim 10,
**characterized in that,**
an overload protector (51) is associated with the rotary angle indicator (41), which overload protector limits the maximum transmissible torque and is preferably formed by means of a sliding clutch (52).

12. Dental treatment chair according to claim 11,
**characterized in that,**
the sliding clutch (52) has an elastically compressed coupling ring (54) between two friction surfaces.

## Revendications

1. Fauteuil de soins dentaires (1) comportant un fauteuil pour patient (2) et un crachoir (4) qui est monté sur un bras de support (7a) lequel dépasse latéralement d'un corps de base (7b) d'un porte-crachoir (7) qui est monté dans un palier rotatif (8) de manière à pouvoir tourner ou pivoter dans un sens et dans l'autre autour d'un axe vertical (8a), le palier rotatif (8) étant disposé dans la zone d'un boîtier d'appareil (6),
**caractérisé**
a) **en ce que** le boîtier d'appareil (6) présente une paroi de couverture,
b) **en ce que** le palier rotatif (8) est disposé dans la zone de la paroi de couverture du boîtier d'appareil (6),
c) **en ce que** le porte-crachoir (7) est déplaçable au moyen d'un entraînement motorisé (23),
d) **en ce que** l'entraînement (23) est disposé dans le boîtier d'appareil (6),
e) et **en ce qu'**à l'entraînement (23) est associée une protection contre les surcharges (32) qui limite le couple de rotation maximal pouvant être transmis au porte-crachoir (7),
le fauteuil de soins présentant des moyens conçus pour déterminer une surcharge et, en cas de surcharge, pour déconnecter l'entraînement (23), au bout d'un temps de retard, de préférence au bout de quatre secondes ou plus, si la surcharge dure plus longtemps que le temps de retard.

2. Fauteuil de soins dentaires selon la revendication 1,
**caractérisé**
**en ce que** l'entraînement (23) comporte un arbre d'entraînement (25) disposé de préférence verticalement, qui est en liaison d'entraînement, par une transmission à roues (26), avec un arbre de support (17) de préférence creux, qui s'étend verticalement vers le bas, depuis le porte-crachoir (7), dans la cavité du boîtier d'appareil (6).

3. Fauteuil de soins dentaires selon la revendication 2,
**caractérisé**
**en ce que** la transmission à roues (26) est formée par une transmission à roues dentées ou une transmission à courroie ou une transmission à roue de friction.

4. Fauteuil de soins dentaires selon l'une des revendications précédentes,
**caractérisé**
**en ce que** la protection contre les surcharges (32) est formée par un accouplement à glissement (33) qui est intégré par exemple à la transmission à roues (26), ou est formée par exemple par la transmission à courroie ou la transmission à roue de friction, ou est disposée sur l'arbre d'entraînement (25).

5. Fauteuil de soins dentaires selon la revendication 4,
**caractérisé**
**en ce que** l'accouplement à glissement (33) est disposé entre deux segments (25a, 25b) de l'arbre d'entraînement.

6. Fauteuil de soins dentaires selon la revendication 5,
**caractérisé**
**en ce qu'**un segment (25b) de l'arbre d'entraînement passe sur l'extrémité qui est tournée vers lui de l'autre segment (25a) de l'arbre d'entraînement par un manchon de friction (35), et un ou plusieurs éléments de friction (34) sont disposés entre le manchon de friction (35) et l'extrémité recouverte de l'autre segment (25a) de l'arbre d'entraînement.

7. Fauteuil de soins dentaires selon la revendication 6,
**caractérisé**
**en ce que** le ou les éléments de friction (34) sont disposés sur le segment (25a) recouvert de l'arbre d'entraînement et sont précontraints élastiquement contre le manchon (35).

8. Fauteuil de soins dentaires selon l'une des revendications 5 à 7,
**caractérisé**
**en ce qu'**un palier rotatif (37) est réalisé entre les segments (25a, 25b) de l'arbre d'entraînement.

9. Fauteuil de soins dentaires selon l'une des revendications précédentes,
**caractérisé**
**en ce que** l'entraînement (23) comporte un moteur d'entraînement (24) de préférence électrique qui est relié, par un organe d'amortissement (31), à l'arbre d'entraînement (25).

10. Fauteuil de soins dentaires selon l'une des revendications précédentes,
**caractérisé**
**en ce qu'**il est prévu un capteur d'angle de rotation (41) qui relève la distance de rotation ou l'angle de rotation ou de pivotement du crachoir (4) ou du porte-crachoir (7), et qui est en liaison d'entraînement en rotation, par exemple par un arbre de capteur (43), avec le porte-crachoir (7) ou une partie de l'entraînement (23).

11. Fauteuil de soins dentaires selon la revendication 10,
**caractérisé**
**en ce qu'**au capteur d'angle de rotation (41) est associée une protection contre les surcharges (51) qui limite le couple de rotation maximal transmissible et est formée de préférence par un accouplement à glissement (52).

12. Fauteuil de soins dentaires selon la revendication 11,
**caractérisé**
**en ce que** l'accouplement à glissement (52) comporte une bague d'accouplement (54) comprimée élastiquement entre deux surfaces de friction.
